# FASCICULE DE BREVET EUROPEEN

(11) **EP 3 807 680 B1**
(45) Date de publication et mention de la délivrance du brevet: **29.04.2026**
(21) Numéro de dépôt: 19758896.5
(22) Date de dépôt: 06.06.2019
(51) Int. Cl.: G02B 5/02, G02B 27/01

(54) **APPAREIL DE PROJECTION ET SYSTÈME DE VISION TÊTE HAUTE ASSOCIÉ**
PROJEKTIONSVORRICHTUNG UND ZUGEHÖRIGES HEAD-UP-BETRACHTUNGSSYSTEM
PROJECTING APPARATUS AND ASSOCIATED HEAD-UP VIEWING SYSTEM

(30) Priorité: 13.06.2018 FR 1855196
(43) Date de publication de la demande: 21.04.2021
(73) Titulaire: Valeo Comfort and Driving Assistance, 94000 Créteil (FR)
(72) Inventeur: BLANC, Eric, 94046 Créteil CEDEX (FR); DELPIERRE, Laurent, 94046 Créteil (FR); GRANDCLERC, François, 94046 Créteil CEDEX (FR)
(74) Mandataire: Delplanque, Arnaud
(86) Numéro de dépôt international: PCT/EP2019/064869
(87) Numéro de publication internationale: WO 2019/238540

(56) Documents cités:
- EP-A1- 3 064 995
- FR-A1- 3 058 802
- US-A1- 2016 266 283

## Description

### DOMAINE TECHNIQUE AUQUEL SE RAPPORTE L'INVENTION

La présente invention concerne de manière générale le domaine des aides à la conduite de véhicules motorisés. Elle concerne plus particulièrement un appareil de projection et un système de vision tête haute associé.

### ARRIERE-PLAN TECHNOLOGIQUE

Pour faciliter et rendre plus sûre la conduite d'un véhicule automobile, on souhaite éviter que le conducteur ne soit forcé de détourner son regard de la route qu'il emprunte.

Pour cela, il est connu d'utiliser un système de vision haute permettant un affichage tête-haute, adapté à projeter des informations (vitesse du véhicule, direction à suivre, ...) à la hauteur du regard du conducteur afin de l'aider dans sa conduite. A cette fin, un appareil de projection de ces informations est mis en œuvre au sein du système. Un tel appareil est notamment connu des documents EP 3064995A1 et FR3058802A1.

Cet appareil de projection comporte principalement un dispositif de génération d'un faisceau lumineux et un écran imageur. En général, un miroir de repliement est utilisé pour renvoyer les images produites par l'appareil de projection vers une lame partiellement réfléchissante disposée à la hauteur du regard du conducteur. Le miroir de repliement peut être intégré à l'appareil de projection.

Un problème rencontré avec les systèmes connu est la difficulté d'obtenir une illumination uniforme des informations projetées. En outre, il faut également éviter les réflexions parasites de sources lumineuses externes sur des éléments optiques du système de vision tête haute et en particulier de son appareil de projection. Parmi ces sources lumineuses externes, le soleil, sous certaines inclinaisons, peut venir se refléter sur des éléments optiques de l'appareil de projection et gêner le conducteur et la lecture des informations projetées.

### OBJET DE L'INVENTION

On propose, selon l'invention, un appareil de projection (destiné ici à un système de vision tête haute d'un affichage lumineux pour un conducteur d'un véhicule) comportant, de l'amont vers l'aval d'un chemin lumineux (ici d'un chemin lumineux d'affichage vers le conducteur), au moins un dispositif de génération d'un faisceau lumineux de direction principale déterminée, un premier diffuseur ayant une première indicatrice optique de diffusion, un second diffuseur ayant une seconde indicatrice optique de diffusion (ces diffuseurs formant un moyen de diffusion de la lumière du faisceau lumineux de direction principale déterminée généré par le dispositif de génération d'un faisceau lumineux) et un écran imageur du genre transmissif (typiquement plan et comportant deux faces opposées, une face d'entrée recevant le faisceau lumineux issu du dispositif de génération d'un faisceau lumineux et une face de sortie opposée), le premier diffuseur et le second diffuseur étant séparés d'une distance déterminée et la première indicatrice optique de diffusion étant différente de la seconde indicatrice optique de diffusion. L'écran imageur est un écran à cristaux liquides à transistors en couche mince qui présente une face d'entrée qui est plane, tournée vers le dispositif de génération d'un faisceau lumineux, et une face de sortie opposée, qui est plane et par laquelle l'image est transmise dans le faisceau lumineux.

L'utilisation de deux diffuseurs distincts ayant des indicatrices optiques de diffusion distinctes permet une plus grande souplesse dans le choix de ces diffuseurs, tout en permettant que l'effet résultant de la combinaison des effets des deux diffuseurs assure la diffusion souhaitée. On peut ainsi choisir par exemple deux diffuseurs relativement simples (et donc peu coûteux), mais dont la combinaison produit une fonction de diffusion relativement complexe.

On comprend que dans le cadre de l'invention, les termes amont, aval ou entrée, sortie ou leurs équivalents, indiquant le positionnement des différents moyens optiques le long du chemin lumineux sont essentiellement déterminés en relation avec le sens de propagation de la lumière le long du chemin lumineux depuis une source lumineuse du dispositif de génération d'un faisceau lumineux.

D'autres caractéristiques non limitatives et avantageuses de l'appareil conforme à l'invention, prises individuellement ou selon toutes les combinaisons techniquement possibles, sont les suivantes :
- le second diffuseur et l'écran imageur sont inclinés par rapport à la direction principale du faisceau lumineux généré par le dispositif de génération d'un faisceau lumineux (c'est-à-dire que ledit second diffuseur et ledit écran imageur ne sont pas perpendiculaires à la direction principale du faisceau lumineux généré par le dispositif de génération d'un faisceau lumineux) ;
- l'appareil de projection comporte en outre un miroir de repliement de sortie en aval de l'écran imageur, c'est-à-dire côté face de sortie de l'écran imageur,
- le miroir de repliement de sortie est plan,
- le miroir de repliement de sortie est non plan,
- le miroir de repliement de sortie est de forme libre,
- chaque diffuseur a un angle de déviation, ledit angle pouvant être nul ou non-nul,
- chaque diffuseur produit une diffusion de la lumière avec un axe principal de cône de diffusion défini,
- en cas d'angle de déviation nul, l'axe principal de cône de diffusion est colinéaire au faisceau incident,
- en cas d'angle de déviation non-nul, l'axe principal de cône de diffusion est incliné par rapport au faisceau incident,
- l'axe principal du cône de diffusion de la lumière du premier diffuseur et la direction principale du faisceau lumineux le frappant sont colinéaires, l'angle de déviation étant nul,
- l'axe principal du cône de diffusion de la lumière du premier diffuseur et la direction principale du faisceau lumineux le frappant sont coplanaires,
- le second diffuseur a un angle de déviation nul,
- le second diffuseur a un angle de déviation non nul,
- l'axe principal du cône de diffusion de la lumière du second diffuseur et la direction principale du faisceau lumineux le frappant sont inclinés entre eux,
- le second diffuseur est en outre un déviateur du faisceau lumineux généré par le dispositif de génération d'un faisceau lumineux,
- l'angle de déviation du second diffuseur est tel que l'axe principal de cône de diffusion produit est sensiblement perpendiculaire à la face d'entrée de l'écran imageur,
- le second diffuseur est parallèle à l'écran imageur,
- le second diffuseur n'est pas parallèle à l'écran imageur,
- le second diffuseur est parallèle à l'écran imageur et l'angle de déviation du second diffuseur a une valeur absolue sensiblement égale à l'angle d'inclinaison de l'écran imageur par rapport à la normale à la direction principale déterminée du faisceau lumineux généré par le dispositif de génération d'un faisceau lumineux,
- le second diffuseur est disposé contre la face d'entrée de l'écran imageur, le second diffuseur étant solidaire de l'écran imageur,
- le second diffuseur est disposé à une distance déterminée de la face d'entrée de l'écran imageur,
- le dispositif de génération d'un faisceau lumineux comporte un réflecteur destiné à former en sortie le faisceau lumineux de direction principale déterminée et le premier diffuseur est disposé en sortie dudit réflecteur,
- le réflecteur est métallique et forme un radiateur thermique pour au moins une source lumineuse du dispositif de génération d'un faisceau lumineux,
- le réflecteur forme en sortie un faisceau lumineux de divergence réduite par rapport à la direction principale du faisceau lumineux, ladite divergence étant comprise entre 0° et 45° bornes comprises,
- de préférence, la divergence est comprise entre 0° et 12,5° bornes comprises,
- le premier diffuseur a un angle de déviation nul,
- le premier diffuseur a un angle de déviation non-nul,
- le premier diffuseur est disposé contre la sortie du réflecteur,
- le premier diffuseur est disposé à une distance déterminée de la sortie duréflecteur,
- le premier diffuseur est sensiblement perpendiculaire à la direction principale déterminée du faisceau lumineux en sortie du réflecteur,
- le premier diffuseur n'est pas perpendiculaire à la direction principale déterminée du faisceau lumineux en sortie du réflecteur,
- le premier diffuseur est conformé en forme de dioptre, ladite forme de dioptre correspondant à celle d'une lentille optique qui, au même emplacement, produirait en sortie un faisceau lumineux sensiblement collimaté à partir du dispositif de génération d'un faisceau lumineux,
- le premier diffuseur conformé en forme de dioptre présente une structure de Fresnel,
- le faisceau lumineux entre le dispositif de génération d'un faisceau lumineux et l'écran imageur est confiné dans un tube à paroi(s) interne(s) non réflectrice(s) de la lumière,
- le faisceau lumineux entre le dispositif de génération d'un faisceau lumineux et l'écran imageur est confiné dans un tube à paroi(s) interne(s) absorbant la lumière,
- le faisceau lumineux entre le dispositif de génération d'un faisceau lumineux et l'écran imageur est confiné dans un tube à paroi(s) interne(s) réflectrice(s) de la lumière,
- le tube est de section circulaire, carrée ou rectangulaire,
- l'appareil comporte en outre un miroir de repliement intermédiaire entre la sortie du réflecteur et l'écran imageur afin de changer la direction du faisceau lumineux,
- le miroir de repliement intermédiaire est disposé entre le premier diffuseur et le second diffuseur,
- le miroir de repliement intermédiaire est disposé entre la sortie du réflecteur et le premier diffuseur,
- le miroir de repliement intermédiaire est plan,
- le miroir de repliement intermédiaire est non plan,
- le miroir de repliement intermédiaire est de forme libre,
- le miroir de repliement intermédiaire est intégré au premier diffuseur,
- le miroir de repliement intermédiaire est intégré au premier diffuseur et une des deux faces du diffuseur comporte une surface réfléchissante, ladite surface réfléchissante étant la surface du diffuseur opposée à la surface d'entrée du diffuseur, ladite surface d'entrée du diffuseur étant celle disposée du côté du dispositif de génération d'un faisceau lumineux,
- l'appareil de projection comporte un miroir de repliement intermédiaire et un miroir de repliement de sortie,
- dans le cas où un miroir de repliement intermédiaire est disposé dans l'appareil de projection, le miroir de repliement de sortie est omis,
- chaque diffuseur est un diffuseur à diffusion de lumière choisie parmi les diffusions linéaire, circulaire, circulaire gaussienne, elliptique, en nid d'abeille, en prisme ou autre,
- le premier diffuseur génère une première diffusion choisie dans la liste suivante : linéaire, circulaire, circulaire gaussienne, elliptique, en nid d'abeille, en prisme ;
- le second diffuseur génère une seconde diffusion choisie dans la liste suivante : linéaire, circulaire, circulaire gaussienne, elliptique, en nid d'abeille, en prisme ;
- dans un mode de réalisation où la première diffusion est linéaire, la seconde diffusion peut être circulaire (par exemple circulaire gaussienne) ou elliptique ou en nid d'abeille ou en prisme ;
- dans un mode de réalisation où la première diffusion est circulaire (éventuellement circulaire gaussienne), la seconde diffusion peut être linéaire ou elliptique ou en nid d'abeille ou en prisme ;
- dans un mode de réalisation où la première diffusion est elliptique, la seconde diffusion peut être linéaire ou circulaire (par exemple circulaire gaussienne) ou en nid d'abeille ou en prisme ;
- dans un mode de réalisation où la première diffusion est en nid d'abeille, la seconde diffusion peut être linéaire ou circulaire (par exemple circulaire gaussienne) ou elliptique ou en prisme ;
- dans un mode de réalisation où la première diffusion est en prisme, la seconde diffusion peut être linéaire ou circulaire (par exemple circulaire gaussienne) ou elliptique ou en nid d'abeille ;
- au moins un des deux diffuseurs est en matière plastique moulée ou injectée,
- le premier diffuseur est en matière plastique choisie dans la famille des polyéthylènes notamment téréphtalate ou des polycarbonates,
- le diffuseur comporte deux faces opposées, au moins une des deux faces étant dépolie,
- au moins un des deux diffuseurs a ses faces principales opposées planes,
- au moins un des deux diffuseurs a ses faces principales opposées parallèles,
- au moins un des deux diffuseurs a ses faces principales opposées non planes,
- au moins un des deux diffuseurs a ses faces principales opposées non parallèles,
- au moins un des deux diffuseurs a une épaisseur uniforme,
- au moins un des deux diffuseurs a une épaisseur non uniforme,
- au moins un des deux diffuseurs d'épaisseur non uniforme est en forme de prisme,
- au moins un des deux diffuseurs est de forme libre,
- le véhicule est choisi parmi : une automobile, un camion, un bus ou un autocar.
- le véhicule est choisi parmi : une automobile, un camion, un bus ou un autocar.

L'invention concerne également un système de vision tête haute d'un affichage lumineux pour un conducteur d'un véhicule, ledit système comportant au moins un appareil de projection tel que proposé ci-dessus et un système optique conçu pour projeter le faisceau lumineux en direction d'une lame partiellement réfléchissante.

D'autres caractéristiques non limitatives et avantageuses du système conforme à l'invention, prises individuellement ou selon toutes les combinaisons techniquement possibles, sont les suivantes :
- le système de vision tête haute comporte en outre un miroir de repliement de sortie en aval de l'écran imageur de l'appareil de projection,
- l'appareil de projection comporte en outre un miroir de repliement de sortie, le miroir de repliement de sortie réfléchissant le chemin lumineux vers la lame partiellement réfléchissante d'affichage du système,
- dans le système, la lame partiellement réfléchissante d'affichage est une plaque partiellement réfléchissante dédiée au système de vision tête haute et rapportée dans le véhicule ou, alors, est le parebrise du véhicule,
- dans le système, la plaque partiellement réfléchissante d'affichage est teintée ou opaque,
- dans le système, le parebrise comporte dans la zone formant la lame partiellement réfléchissante un traitement destiné à éviter les images fantômes,
- dans le système, la lame partiellement réfléchissante d'affichage est pratiquement totalement réfléchissante,
- l'appareil de projection comporte en outre un miroir de repliement intermédiaire entre le dispositif de génération d'un faisceau lumineux et l'écran imageur,
- l'appareil de projection comporte un miroir de repliement intermédiaire à la place du miroir de repliement de sortie.

### DESCRIPTION DETAILLEE D'UN EXEMPLE DE REALISATION

La description qui va suivre en regard du dessin annexé, donné à titre d'exemple non limitatif, fera bien comprendre en quoi consiste l'invention et comment elle peut être réalisée.

Sur le dessin annexé :

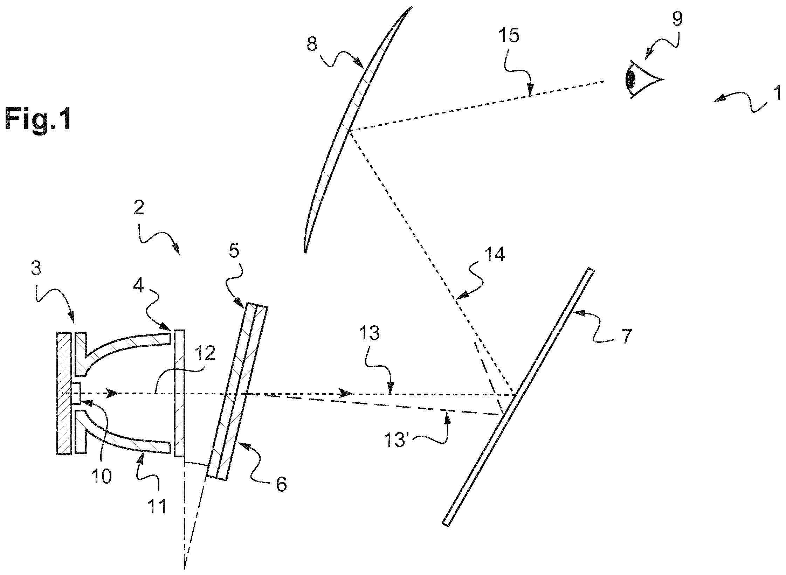

- la figure 1 représente une vue schématique d'un système de vision tête haute pour conducteur de véhicule automobile comportant un appareil de projection selon l'invention.

Sur la figure 1, on a représenté un système 1 de vision tête haute destiné à équiper un véhicule, par exemple un véhicule automobile de type voiture.

Ce système de vision tête haute comprend un appareil de projection 2 d'images piloté par un calculateur (non représenté) et un système optique de projection essentiellement constitué d'un miroir de repliement de sortie 7 et d'une lame partiellement réfléchissante 8 destinés à projeter des images vers un conducteur 9 du véhicule.

En pratique, l'appareil de projection 2 comprend d'amont, côté source lumineuse, vers l'aval, côté champ de vision du conducteur :
- un dispositif de génération 3 d'un faisceau lumineux avec au moins une source lumineuse 10,
- un premier diffuseur 4 du faisceau lumineux 12 généré par le dispositif de génération 3 d'un faisceau lumineux,
- un second diffuseur 5 du faisceau lumineux 12 et
- un écran imageur 6 permettant la formation des images qui sont destinées à être projetées. Le premier et le second diffuseurs sont typiquement des éléments optiques plans/plats et d'épaisseur uniforme. Chacun d'entre eux 4, 5 défini un plan dit plan de diffuseur qui lui est propre. De même, l'écran imageur 6 est typiquement un élément optique plan/plat et d'épaisseur uniforme. L'écran imageur 6 défini un plan dit plan d'imageur.

Dans l'exemple représenté figure 1, le faisceau lumineux 12 généré par le dispositif de génération 3 d'un faisceau lumineux suit un chemin lumineux en traversant le premier diffuseur 4 puis le second diffuseur 5 puis l'écran imageur 6 en poursuivant son trajet sous forme du faisceau lumineux référencé 13 qui vient se réfléchir sur le miroir de repliement 7, ce dernier pouvant ou non faire partie de l'appareil de projection 2.

Plus en aval, le faisceau lumineux 13, après réflexion sur le miroir de repliement 7, prend la référence 14 et vient frapper la lame partiellement réfléchissante 8. L'image projetée selon le faisceau lumineux est rendue visible le long de la direction, référencée 15, du regard/champ de vision du conducteur 9. On comprend que sur la figure 1, le faisceau lumineux représenté est symbolisé par des axes qui sont les directions principales dudit faisceau, le faisceau en lui-même ayant une section transversale pouvant être circulaire ou carrée ou rectangulaire, voir autre, selon les cas.

Le dispositif de génération 3 d'un faisceau lumineux comporte un réflecteur (formé typiquement d'un élément évasé intérieurement réfléchissant) 11 destiné à produire en sortie un faisceau lumineux 12 de direction déterminée et sensiblement collimaté à divergence relativement réduite. Le premier diffuseur 4 est dans l'exemple représenté placé contre la sortie du réflecteur 11 du dispositif de génération 3 d'un faisceau lumineux.

La source lumineuse 10 peut être formée par un réseau coplanaire de diodes électroluminescentes portées par un circuit imprimé ou par une seule diode électroluminescente de puissance adaptée.

Sur la figure 1, le second diffuseur 5 est disposé solidaire contre la face d'entrée de l'écran imageur 6 et ces deux éléments 5, 6 sont donc parallèles entre eux.

Du fait de la solidarisation entre le second diffuseur 5 et l'écran imageur 6, l'installation et le réglage de ces éléments dans l'appareil de projection 2 sont simplifiés. De plus, on évite les réflexions parasites éventuelles qui pourraient se produire sur les interfaces optiques de ces éléments s'ils étaient séparés ou surtout inclinés entre eux. Le fait que l'écran imageur 6 ne soit pas perpendiculaire au faisceau lumineux permet d'éviter les réflexions parasites et en particulier du soleil. Grâce à cela, un éventuel reflet du soleil ne sera pas renvoyé dans la zone de vision du conducteur mais passera en dehors du miroir de repliement 7. On peut cependant prévoir d'autres moyens, possiblement additionnels ou alternatifs, d'éviter des réflexions parasites, notamment dans le cas de variantes où le second diffuseur 5 et l'écran imageur 6 peuvent être séparés par un espace libre ou rempli de matière transparente, notamment par bloc de matière plastique transparente. Dans encore d'autres variantes possiblement combinées aux précédentes, le second diffuseur 5 et l'écran imageur 6 peuvent être inclinés entre eux et/ou d'épaisseurs non uniformes.

Ainsi, dans des variantes, l'écran imageur 6 et le second diffuseur 5 ne sont pas parallèles entre eux. Dans ce dernier cas, si l'écran imageur 6 n'est pas perpendiculaire au faisceau lumineux 12 alors le second diffuseur peut ou non être perpendiculaire au faisceau lumineux 12, ou si le second diffuseur n'est pas perpendiculaire au faisceau lumineux 12 alors l'écran imageur 6 peut ou non être perpendiculaire au faisceau lumineux 12 ou, alors, l'écran imageur 6 et le second diffuseur 5 ne sont pas perpendiculaires au faisceau lumineux 12 et non parallèles entre eux.

Comme visible sur la figure 1, le premier diffuseur 4 plan est ici placé perpendiculairement au faisceau lumineux 12 généré par le dispositif de génération 3 d'un faisceau lumineux, c'est-à-dire que le plan de diffuseur du premier diffuseur 4 est perpendiculaire au faisceau lumineux 12. Le second diffuseur 5 plan et l'écran imageur 6 sont non perpendiculaires (i.e. chacun inclinés par rapport) au faisceau lumineux 12 ayant traversé le premier diffuseur, c'est-à-dire que le plan de diffuseur du second diffuseur 5 et que le plan d'imageur ne sont pas perpendiculaires au faisceau lumineux 12.

Les diffuseurs ont des propriétés optiques qui sont caractérisées par des paramètres définis. Parmi ces propriétés, la déviation des rayons lumineux par un diffuseur peut être caractérisée par un paramètre d'angle de déviation qui est mesuré entre la direction du faisceau incident d'entrée et la direction principale du faisceau diffusé de sortie. Selon la valeur de cet angle de déviation, l'orientation de l'axe principal de cône de diffusion ou, ce qui est équivalent, de l'indicatrice optique de diffusion, et qui correspond à l'orientation principale de la lumière diffusée en sortie du diffuseur sera plus ou moins incliné par rapport à la direction du rayon lumineux incident/d'entrée. Ainsi, un diffuseur à angle de déviation de 0° ne dévira pas la lumière incidente et, par contre, un diffuseur d'angle de déviation de 15° aura un axe principal de cône de diffusion incliné de 15° par rapport à la direction du faisceau lumineux incident.

En utilisant des techniques particulières (par exemple un motif optique particulier), on peut créer des diffuseurs qui, en plus de la diffusion, dévient globalement la lumière selon des angles de déviation déterminés.

Sur la figure 1, le premier diffuseur 4 perpendiculaire au faisceau lumineux 12 en sortie du dispositif de génération 3 d'un faisceau lumineux a un angle de déviation nul et le faisceau lumineux en sortie du premier diffuseur 4 reste colinéaire au faisceau en entrée du premier diffuseur 4.

Concernant le second diffuseur 5 qui est parallèle à l'écran imageur 6 sur la figure 1, les deux étant inclinés par rapport au faisceau lumineux incident, on a représenté deux cas sur la figure 1.

Le premier cas est celui où l'angle de déviation du second diffuseur 5 est nul et le faisceau lumineux 13 en sortie de l'écran imageur 6 reste colinéaire au faisceau lumineux arrivant sur le second diffuseur 5. De ce fait, l'axe principal de cône de diffusion produit par le second diffuseur 5 n'est pas perpendiculaire au plan d'imageur 6.

Le second cas est celui où l'angle de déviation du second diffuseur 5 est non nul et compense l'inclinaison du second diffuseur 5 (et de l'écran imageur 6) pour former un faisceau lumineux 13' perpendiculaire au plan d'imageur. De ce fait, l'axe principal de cône de diffusion produit par le second diffuseur 5 est perpendiculaire au plan de l'écran imageur 6.

De préférence, pour le second diffuseur 5 qui n'est pas perpendiculaire au faisceau lumineux incident 12 qui vient le frapper, on met en œuvre un diffuseur qui a un angle de déviation non nul afin que l'axe principal de cône de diffusion du second diffuseur soit sensiblement perpendiculaire à la face d'entrée de l'écran imageur et donc sensiblement perpendiculaire au plan d'imageur. Ainsi, si le second diffuseur 5 et l'écran imageur 6 sont parallèles entre eux, l'angle de déviation de la lumière du second diffuseur sera choisi sensiblement égal (au moins en valeur absolue) à l'inclinaison de l'écran imageur 6 (ou du second diffuseur 5, leurs inclinaisons étant identiques) par rapport à la normale du faisceau lumineux incident 12 reçu par le second diffuseur 5. A titre d'exemple, si les plans de l'écran imageur et celui du second diffuseur sont inclinés de 15° par rapport à la normale au faisceau lumineux issu du dispositif de génération d'un faisceau lumineux alors l'angle de déviation du second diffuseur est en valeur absolue de 15° afin que l'axe principal de cône de diffusion du second diffuseur soit perpendiculaire au plan d'imageur, ce qui correspond au faisceau lumineux 13' sur la figure 1.

On comprend que dans le cas où le second diffuseur et l'écran imageur ne sont pas parallèles, les deux étant toutefois non perpendiculaires au faisceau lumineux 12 généré par le dispositif de génération 3 d'un faisceau lumineux, on utilise un second diffuseur permettant une déviation faisant que le faisceau lumineux dévié arrive sensiblement perpendiculaire à la face d'entrée de l'écran imageur.

Le terme sensiblement, doit être compris d'une manière large et que si, de préférence, le faisceau dévié par le second diffuseur arrive exactement perpendiculaire au plan d'écran imageur/la face d'entrée de l'écran imageur, dans d'autres cas on prévoit une légère inclinaison qui pourra être comprise dans +/- 5° par rapport à la perpendicularité.

L'indicatrice optique de diffusion du premier diffuseur 4 est différente de l'indicatrice optique de diffusion du second diffuseur 5, ce qui permet de choisir des diffuseurs 4, 5 de conception simple (et donc de coût réduit), mais qui produisent par complémentarité l'effet de diffusion souhaité.

En outre, le type de diffusion des diffuseurs peut être identique ou non entre les deux diffuseurs, ces types pouvant correspondre à des diffusions linéaire, circulaire, circulaire gaussienne, elliptique, en nid d'abeille, en prisme ou toute autre utile. On peut ainsi mettre en œuvre des complémentarités entre les types de diffusion et/ou entre les axes principaux des cônes de diffusion de la lumière respectifs des deux diffuseurs.

Ainsi, par exemple, le premier diffuseur 4 peut générer une diffusion circulaire (par exemple circulaire gaussienne), tandis que le second diffuseur 5 peut alors générer une diffusion linéaire (ou en variante une diffusion elliptique, ou en nid d'abeille, ou en prisme).

Dans un autre mode de réalisation envisageable, on peut par exemple utiliser deux diffuseurs 4, 5 de type ellipsoïde avec des grands axes qui sont perpendiculaires (les types de diffusion des deux diffuseurs 4, 5 étant dans ce cas identique, mais les indicatrices optiques de diffusion distinctes).

Chaque diffuseur 4, 5 peut avoir un taux de diffusion plus ou moins important, c'est-à-dire une proportion plus ou moins importante (par exemple entre 10% et 70 %) du flux lumineux en sortie ayant une direction différente de plus de 10° d'un axe principal du flux lumineux en sortie.

Dans le mode de réalisation illustré sur la figure 1, l'écran imageur 6 est du genre « transmissif » et la source lumineuse 10 est adaptée à rétroéclairer cet écran imageur.

L'écran imageur 6 est ici un écran à cristaux liquides (ou LCD pour "Liquid Crystal Display") à transistors en couche mince (ou TFT pour "Thin-Film Transistor"). Il présente une face d'entrée qui est plane, tournée vers le dispositif de génération 3 d'un faisceau lumineux. Il présente également une face de sortie opposée, qui est plane et par laquelle l'image est transmise dans le faisceau lumineux 13.

Comme le montre la figure 1, l'écran imageur 6 permet, sous le contrôle du calculateur (non représenté), de générer une image qui est projetée dans le champ de vision du conducteur 9 lorsque la direction du regard de ce dernier sera tournée vers la voie de circulation (et ainsi vers la lame partiellement réfléchissante 8 comme illustré en figure 1). Ce système est plus précisément conçu pour projeter une image virtuelle dans le champ de vision du conducteur du véhicule.

Il comporte donc à cet effet le miroir de repliement 7 et la lame partiellement réfléchissante 8, cette dernière étant placée dans le champ de vision du conducteur 9 du véhicule. Il pourrait éventuellement aussi comporter une lentille/dioptre de grossissement (non représenté). De préférence, le miroir de repliement est incorporé à l'appareil de projection 2 mais dans des variantes il peut être indépendant.

La lame partiellement réfléchissante 8 est de préférence un combineur disposé dans l'habitacle du véhicule automobile, entre le pare-brise du véhicule et les yeux du conducteur 9. En variante, la lame partiellement réfléchissante 8 pourrait être formée par le pare-brise lui-même.

La lame partiellement réfléchissante 8 comporte une vitre optique courbe partiellement réfléchissante réalisant ici une fonction de grandissement. Il peut s'agir d'une pièce injectée en polycarbonate, qui est incurvée de manière à agrandir la taille de l'image vue par le conducteur 9.

Le calculateur (non représenté) préparant les images destinées à être projetées comprend typiquement un processeur et une unité de mémorisation, par exemple une mémoire dont une mémoire non-volatile réinscriptible ou un disque dur.

Le système représenté permet l'affichage d'images en deux dimensions mais, dans des variantes de réalisation, on peut compléter le système de vision tête haute avec notamment un filtre auto-stéréoscopique en sortie de l'écran imageur 6 afin de permettre l'affichage d'images en quasi trois dimensions par un effet visuel de profondeur pour le conducteur, les images projetées semblant apparaitre sur des plans différents pour le conducteur.

Dans diverses modalités de réalisation, on prévoit la mise en œuvre de moyens d'agrandissement des images projetées par l'écran imageur notamment avec le moyen décrit ci-dessus et/ou la mise en œuvre d'une lentille ou d'un dioptre de grandissement sur le trajet de l'image projetée. On peut aussi prévoir des moyens de correction de forme d'image, par logiciel et/ou par des moyens matériels, par exemple avec un miroir de repliement non plan et/ou au moins une lentille/dioptre de surfaces adaptées pour tenir compte du fait que l'image peut être projetée sur une surface courbe sur laquelle elle est rendue visible.

## Revendications

1. Appareil de projection (2) comportant, de l'amont vers l'aval d'un chemin lumineux, au moins un dispositif de génération (3) d'un faisceau lumineux (12, 13, 14, 15) de direction principale déterminée (12), un premier diffuseur (4) ayant une première indicatrice optique de diffusion, un second diffuseur (5) ayant une seconde indicatrice optique de diffusion, et un écran imageur (6), le premier diffuseur (4) et le second diffuseur (5) étant séparés d'une distance déterminée,
**caractérisé en ce que** l'écran est du genre transmissif et que la première indicatrice optique de diffusion est différente de la seconde indicatrice optique de diffusion, et
l'écran imageur (6) est ici un écran à cristaux liquides à transistors en couche mince qui présente :
- une face d'entrée qui est plane, tournée vers le dispositif de génération (3) d'un faisceau lumineux, et
- une face de sortie opposée, qui est plane et par laquelle l'image est transmise dans le faisceau lumineux (13).

2. Appareil de projection (2) selon la revendication 1, **caractérisé en ce que** le premier diffuseur (4) génère une première diffusion choisie dans la liste suivante : linéaire, circulaire, circulaire gaussienne, elliptique, en nid d'abeille, en prisme.

3. Appareil de projection (2) selon la revendication 1 ou 2, **caractérisé en ce que** le second diffuseur (5) génère une seconde diffusion choisie dans la liste suivante : linéaire, circulaire, circulaire gaussienne, elliptique, en nid d'abeille, en prisme.

4. Appareil de projection (2) selon l'une des revendications 1 à 3, **caractérisé en ce que** le second diffuseur (5) et l'écran imageur (6) sont inclinés par rapport à la direction principale du faisceau lumineux (12) généré par le dispositif de génération (3) d'un faisceau lumineux.

5. Appareil de projection (2) selon l'une des revendications 1 à 4, **caractérisé en ce que** le second diffuseur est en outre un déviateur du faisceau lumineux (12) généré par le dispositif de génération (3) d'un faisceau lumineux.

6. Appareil de projection (2) selon la revendication 5, **caractérisé en ce que** l'angle de déviation du second diffuseur est tel que l'axe principal de cône de diffusion produit est sensiblement perpendiculaire à une face d'entrée de l'écran imageur (6).

7. Appareil de projection (2) selon l'une des revendications 1 à 6, **caractérisé en ce que** le second diffuseur (5) est parallèle à l'écran imageur (6).

8. Appareil de projection (2) selon la revendication 7, **caractérisé en ce que** l'angle de déviation du second diffuseur (5) a une valeur absolue sensiblement égale à l'angle d'inclinaison de l'écran imageur par rapport à la normale à la direction principale déterminée du faisceau lumineux (12) généré par le dispositif de génération d'un faisceau lumineux.

9. Appareil de projection (2) selon l'une des revendications 1 à 8, **caractérisé en ce que** le second diffuseur (5) est disposé contre une face d'entrée de l'écran imageur (6), le second diffuseur (5) étant solidaire de l'écran imageur (6).

10. Appareil de projection (2) selon l'une des revendications 1 à 9, **caractérisé en ce que** le dispositif de génération (3) d'un faisceau lumineux comporte un réflecteur (11) destiné à former en sortie le faisceau lumineux (12) de direction principale déterminée et **en ce que** le premier diffuseur (4) est disposé en sortie dudit réflecteur (11).

11. Appareil de projection (2) selon la revendication 10, **caractérisé en ce que** le réflecteur (11) est métallique et forme un radiateur thermique pour au moins une source lumineuse (10) du dispositif de génération (3) d'un faisceau lumineux.

12. Système (1) de vision tête haute d'un affichage lumineux pour un conducteur (9) d'un véhicule, ledit système (1) comportant au moins un appareil de projection (2) selon l'une des revendications 1 à 11 et un système optique conçu pour projeter le faisceau lumineux en direction d'une lame partiellement réfléchissante (8).

## Patentansprüche

1. Projektionsvorrichtung (2), die in Richtung von der Quelle zum Ziel eines Lichtwegs mindestens eine Erzeugungsvorrichtung (3) eines Lichtstrahls (12, 13, 14, 15) mit einer bestimmten Hauptrichtung (12), einen ersten Diffusor (4) mit einer ersten optischen Diffusionsindikation, einen zweiten Diffusor (5) mit einer zweiten optischen Diffusionsindikation und einen Bildschirm (6) umfasst, wobei der erste Diffusor (4) und der zweite Diffusor (5) durch einen bestimmten Abstand getrennt sind, **dadurch gekennzeichnet, dass** der Bildschirm vom transmissiven Typ ist und dass die erste optische Diffusionsindikation sich von der zweiten optischen Diffusionsindikation unterscheidet, und der Bildschirm (6) hier ein Flüssigkristallbildschirm mit Dünnschichttransistoren ist, der aufweist:
- eine Eintrittsfläche, die eben ist, zur Erzeugungsvorrichtung (3) eines Lichtstrahls gerichtet ist, und
- eine gegenüberliegende Austrittsfläche, die eben ist und durch die das Bild im Lichtstrahl (13) übertragen wird.

2. Projektionsvorrichtung (2) nach Anspruch 1, **dadurch gekennzeichnet, dass** der erste Diffusor (4) eine erste Diffusion erzeugt, die aus der folgenden Liste ausgewählt ist: linear, kreisförmig, gaußförmig kreisförmig, elliptisch, wabenförmig, prismenförmig.

3. Projektionsvorrichtung (2) nach Anspruch 1 oder 2, **dadurch gekennzeichnet, dass** der zweite Diffusor (5) eine zweite Diffusion erzeugt, die aus der folgenden Liste ausgewählt ist: linear, kreisförmig, gaußförmig kreisförmig, elliptisch, wabenförmig, prismenförmig.

4. Projektionsvorrichtung (2) nach einem der Ansprüche 1 bis 3, **dadurch gekennzeichnet, dass** der zweite Diffusor (5) und der Bildschirm (6) in Bezug auf die Hauptrichtung des von der Erzeugungsvorrichtung (3) eines Lichtstrahls erzeugten Lichtstrahls (12) geneigt sind.

5. Projektionsvorrichtung (2) nach einem der Ansprüche 1 bis 4, **dadurch gekennzeichnet, dass** der zweite Diffusor außerdem ein Ablenker des von der Erzeugungsvorrichtung (3) eines Lichtstrahls erzeugten Lichtstrahls (12) ist.

6. Projektionsvorrichtung (2) nach Anspruch 5, **dadurch gekennzeichnet, dass** der Ablenkungswinkel des zweiten Diffusors so ist, dass die Hauptachse des erzeugten Diffusionskegels im Wesentlichen senkrecht zu einer Eintrittsfläche des Bildschirms (6) ist.

7. Projektionsvorrichtung (2) nach einem der Ansprüche 1 bis 6, **dadurch gekennzeichnet, dass** der zweite Diffusor (5) parallel zum Bildschirm (6) ist.

8. Projektionsvorrichtung (2) nach Anspruch 7, **dadurch gekennzeichnet, dass** der Ablenkungswinkel des zweiten Diffusors (5) einen Absolutwert hat, der im Wesentlichen gleich dem Neigungswinkel des Bildschirms in Bezug auf die Normale zur bestimmten Hauptrichtung des von der Erzeugungsvorrichtung eines Lichtstrahls erzeugten Lichtstrahls (12) ist.

9. Projektionsvorrichtung (2) nach einem der Ansprüche 1 bis 8, **dadurch gekennzeichnet, dass** der zweite Diffusor (5) gegen eine Eintrittsfläche des Bildschirms (6) angeordnet ist, wobei der zweite Diffusor (5) fest mit dem Bildschirm (6) verbunden ist.

10. Projektionsvorrichtung (2) nach einem der Ansprüche 1 bis 9, **dadurch gekennzeichnet, dass** die Erzeugungsvorrichtung (3) eines Lichtstrahls einen Reflektor (11) umfasst, der dazu bestimmt ist, am Ausgang den Lichtstrahl (12) mit bestimmter Hauptrichtung zu bilden, und dass der erste Diffusor (4) am Ausgang des Reflektors (11) angeordnet ist.

11. Projektionsvorrichtung (2) nach Anspruch 10, **dadurch gekennzeichnet, dass** der Reflektor (11) metallisch ist und einen Wärmekühler für mindestens eine Lichtquelle (10) der Erzeugungsvorrichtung (3) eines Lichtstrahls bildet.

12. Head-up-Sichtsystem (1) einer Lichtanzeige für einen Fahrer (9) eines Fahrzeugs, wobei das System (1) mindestens eine Projektionsvorrichtung (2) nach einem der Ansprüche 1 bis 11 und ein optisches System umfasst, das dazu ausgelegt ist, den Lichtstrahl in Richtung einer teilweise reflektierenden Scheibe (8) zu projizieren.

## Claims

1. Projection apparatus (2) comprising, from upstream to downstream of a light path, at least one device for generating (3) a light beam (12, 13, 14, 15) of determined main direction (12), a first diffuser (4) having a first optical diffusion indicatrix, a second diffuser (5) having a second optical diffusion indicatrix, and an imaging screen (6), the first diffuser (4) and the second diffuser (5) being separated by a determined distance, **characterized in that** the screen is of the transmissive type and the first optical diffusion indicatrix is different from the second optical diffusion indicatrix, and the imaging screen (6) is here a liquid crystal screen with thin-film transistors which presents:
- an input face which is flat, facing the device for generating (3) a light beam, and
- an opposite output face, which is flat and through which the image is transmitted in the light beam (13).

2. Projection apparatus (2) according to claim 1, **characterized in that** the first diffuser (4) generates a first diffusion chosen from the following list: linear, circular, circular Gaussian, elliptical, honeycomb, prism.

3. Projection apparatus (2) according to claim 1 or 2, **characterized in that** the second diffuser (5) generates a second diffusion chosen from the following list: linear, circular, circular Gaussian, elliptical, honeycomb, prism.

4. Projection apparatus (2) according to one of claims 1 to 3, **characterized in that** the second diffuser (5) and the imaging screen (6) are inclined with respect to the main direction of the light beam (12) generated by the device for generating (3) a light beam.

5. Projection apparatus (2) according to one of claims 1 to 4, **characterized in that** the second diffuser is furthermore a deflector of the light beam (12) generated by the device for generating (3) a light beam.

6. Projection apparatus (2) according to claim 5, **characterized in that** the deflection angle of the second diffuser is such that the main axis of the diffusion cone produced is substantially perpendicular to an input face of the imaging screen (6).

7. Projection apparatus (2) according to one of claims 1 to 6, **characterized in that** the second diffuser (5) is parallel to the imaging screen (6).

8. Projection apparatus (2) according to claim 7, **characterized in that** the deflection angle of the second diffuser (5) has an absolute value substantially equal to the angle of inclination of the imaging screen with respect to the normal to the determined main direction of the light beam (12) generated by the device for generating a light beam.

9. Projection apparatus (2) according to one of claims 1 to 8, **characterized in that** the second diffuser (5) is disposed against an input face of the imaging screen (6), the second diffuser (5) being integral with the imaging screen (6).

10. Projection apparatus (2) according to one of claims 1 to 9, **characterized in that** the device for generating (3) a light beam comprises a reflector (11) intended to form at the output the light beam (12) of determined main direction and **in that** the first diffuser (4) is disposed at the output of said reflector (11).

11. Projection apparatus (2) according to claim 10, **characterized in that** the reflector (11) is metallic and forms a heat sink for at least one light source (10) of the device for generating (3) a light beam.

12. Head-up vision system (1) of a luminous display for a driver (9) of a vehicle, said system (1) comprising at least one projection apparatus (2) according to one of claims 1 to 11 and an optical system designed to project the light beam towards a partially reflective plate (8).
